# DEMANDE DE BREVET EUROPEEN

(11) **EP 2 703 143 A1**
(43) Date de publication de la demande: **05.03.2014**
(21) Numéro de dépôt: 13179582.5
(22) Date de dépôt: 07.08.2013
(51) Int. Cl.: B29C 45/17, B29C 45/27, B29C 45/33, B29C 45/40, B29C 45/44

(54) **Dispositif de moulage par injection comprenant un tiroir**

(30) Priorité: 28.08.2012 FR 1258029
(71) Demandeur: VALEO VISION, 93012 Bobigny Cedex (FR)
(72) Inventeur: Bourgaut, Patrice, 72200 La Flèche (FR)

(57) **Abrégé**

L'invention concerne un dispositif de moulage (10) d'un organe en plastique (12), comportant un tiroir (20) déplaçable en translation entre une position ouverte et une position fermée du tiroir, le tiroir (20) comprenant un canal froid (24) débouchant dans la cavité de moulage (22) et le dispositif (10) comprenant un organe d'éjection (30, 32) d'une carotte (28) de matière plastique formée dans le canal froid (24). L'organe d'éjection (30, 32) comporte au moins deux parties, la première partie (30) étant portée par la partie mobile (16) et la deuxième partie (32) étant portée par le tiroir (20), le tiroir (20) étant déplaçable entre une position dans laquelle les deux parties de l'organe d'éjection (30, 32) sont décalées et une position dans laquelle les deux parties de l'organe d'éjection (30, 32) sont sensiblement alignées de manière à pouvoir coopérer ensemble. La cavité de moulage (22) comporte une zone destinée à former une nervure (18) ou une patte de l'organe en plastique (12), le canal froid (24) débouchant dans cette zone.

## Description

La présente invention concerne le domaine du moulage par injection d'un organe en plastique, notamment d'un masque pour dispositif optique pour véhicule automobile.

On connaît de l'état de la technique des dispositifs de moulage par injection d'organes en plastiques ayant une faible épaisseur par exemple des masques pour protecteurs de véhicules automobiles. Ces dispositifs de moulage comportent habituellement deux parties, respectivement fixe et mobile, déplaçables l'une par rapport à l'autre entre une position ouverte et une position fermée du dispositif de moulage, un tiroir déplaçable en translation entre une position ouverte et une position fermée du tiroir, les deux parties et le tiroir formant une cavité de moulage de l'organe en plastique. Ces dispositifs de moulage comportent de plus une ou plusieurs busettes d'injection débouchant dans la cavité de moulage. Les busettes sont positionnées, dans le dispositif de moulage, pour optimiser l'écoulement de matière plastique dans la cavité de moulage et ainsi obtenir un taux de rebut des organes moulés relativement faible.

Cependant, pour des raisons d'esthétique, les masques des projecteurs pour véhicule automobile ne peuvent pas comporter de marque d'injection sur leurs faces visibles. Il est donc souhaitable d'injecter la matière plastique dans des zones du masque qui ne sont pas visibles lorsque le projecteur est monté sur le véhicule automobile.

Cette contrainte rend difficile dans certains cas l'optimisation du positionnement des points d'injection de matière plastique dans la cavité de moulage, en particulier lorsque le dispositif de moulage comporte un tiroir.

En effet, l'accès à un point d'injection optimal dans la cavité requiert dans certains cas de recourir à un canal froid.

On entend par canal froid un canal ménagé dans un dispositif de moulage dans lequel subsiste, après injection de matière, une carotte reliée à l'élément moulé tant que ce dernier est dans le moule. Cette carotte est destinée à être séparée de l'organe moulé lors de l'extraction de cet organe du moule. Le canal froid relie entre eux l'orifice de d'injection d'une busette d'injection de matière plastique et la cavité de moulage.

Toutefois, l'extraction de la carotte du dispositif de moulage requiert au moins un organe d'éjection habituellement porté par la partie mobile du dispositif de moulage.

Compte tenu du mouvement relatif entre la partie mobile du dispositif de moulage et le tiroir, lors de l'ouverture de ce tiroir, ce dernier n'est pas équipé d'organe d'éjection. On n'est donc pas incité à agencer un canal froid dans le tiroir du fait de l'absence d'organe d'éjection dans ce tiroir.

Grâce au canal froid, l'orifice d'injection de la busette d'injection peut être déporté par rapport à l'orifice du canal froid débouchant dans la cavité, ce qui facilite le positionnement de la busette dans le dispositif de moulage. De plus, le canal froid permet d'accéder au point optimal d'injection de matière dans la cavité.

L'invention a pour but de proposer un dispositif de moulage d'un organe en plastique de faible épaisseur comprenant un tiroir et permettant une plus grande flexibilité de positionnement des busettes d'injection.

A cet effet, l'invention a pour objet un dispositif de moulage d'un organe en plastique, ce dispositif comportant deux parties, respectivement fixe et mobile, déplaçables l'une par rapport à l'autre entre une position ouverte et une position fermée du dispositif de moulage, un tiroir déplaçable en translation entre une position ouverte et une position fermée du tiroir, les deux parties du dispositif et le tiroir formant une cavité de moulage de l'organe en plastique.

Selon l'invention, le tiroir comprend un canal froid débouchant dans la cavité de moulage et le dispositif comprend un organe d'éjection d'une carotte de matière plastique formée dans le canal froid, cet organe d'éjection étant déplaçable selon une direction d'éjection et comportant au moins des première et deuxième parties, la première partie de l'organe d'éjection étant portée par la partie mobile du dispositif et la deuxième partie de l'organe d'éjection étant portée par le tiroir, le tiroir étant déplaçable, sensiblement perpendiculairement à la direction de déplacement de l'organe d'éjection, entre une position dans laquelle les deux parties de l'organe d'éjection sont décalées entre elles, correspondant à la position fermée du tiroir, et une position dans laquelle les deux parties de l'organe d'éjection sont sensiblement alignées entre elles de manière à pouvoir coopérer ensemble, correspondant à la position ouverte du tiroir, et la cavité de moulage comporte une zone destinée à former une nervure ou une patte de l'organe en plastique, le canal froid débouchant dans cette zone.

Grâce au tiroir ou coulisseau, il est possible de mouler un objet comportant au moins une surface en contre-dépouille.

L'organe d'éjection du dispositif en deux parties, à savoir une première partie portée par la partie mobile et une deuxième partie portée par le tiroir, permet de tenir compte de la cinématique du tiroir. Ainsi, lorsque le tiroir est en position fermée, les deux parties de l'organe d'éjection sont décalées l'une par rapport à l'autre et ne peuvent pas coopérer ensemble. Il n'est alors pas possible de déplacer l'organe d'éjection de sa position de repos à sa position d'éjection.

Lorsque le dispositif de moulage et le tiroir sont en position ouverte, les deux parties de l'organe d'éjection peuvent coopérer l'une avec l'autre. Il alors est possible d'éjecter la carotte qui s'est solidifiée dans le canal froid.

Du fait que le canal froid est ménagé dans le tiroir, il est possible de positionner un point d'injection de matière plastique dans une partie de la cavité de moulage correspondant à une partie de l'organe à mouler qui n'a pas de fonction esthétique et qui n'est pas accessible par la partie mobile du dispositif de moulage.

Il est ainsi possible d'optimiser le positionnement des points d'injection de matière plastique dans le dispositif de moulage de sorte que l'organe en plastique obtenu après moulage par injection ne comporte notamment pas de marques d'injection sur ses parties ayant une fonction esthétique, visibles dans le cas présent, lorsque l'organe est monté sur le projecteur pour véhicule automobile.

De plus, lorsque le tiroir se déplace de sa position fermée à sa position ouverte, l'organe en plastique restant solidaire de la partie mobile du dispositif, la carotte est séparée de l'organe en plastique par rupture de matière. Il n'est pas nécessaire de prévoir une étape supplémentaire pour provoquer cette rupture.

Le dispositif de moulage peut en outre comporter l'une ou plusieurs des caractéristiques suivantes, prises seules ou en combinaison.
- Le canal froid comprend une partie d'injection de matière plastique de forme sensiblement conique débouchant dans la cavité de moulage et sensiblement convergente vers cette cavité de moulage. Cette forme conique permet de réduire de façon continue la section de passage de matière plastique de la partie d'injection jusqu'au point d'injection dans la cavité de moulage.
- La partie d'injection de forme sensiblement conique est définie par une génératrice, la génératrice formant avec la direction de déplacement de l'organe d'éjection un angle inférieur à 45°, de préférence inférieur ou égale à 30°. On réduit ainsi l'encombrement de la partie d'injection et donc l'encombrement du tiroir dans la direction parallèle à sa direction de déplacement par rapport à la partie mobile du dispositif de moulage. En outre, cet angle permet une éjection aisée de la carotte de matière plastique hors du canal froid.

- Le canal froid comprend une cavité d'homogénéisation reliée d'une part à un orifice d'injection de matière plastique d'une busette d'injection et d'autre part à la partie d'injection de forme sensiblement conique. Cette cavité permet une homogénéisation du flux de matière plastique injecté sous pression avant d'être injectée dans la cavité de moulage.
- Le canal froid comprend un prolongement s'étendant entre la cavité d'homogénéisation et une extrémité de la deuxième partie de l'organe d'éjection. Grâce au prolongement du canal froid, la carotte de matière plastique qui se forme dans la cavité de moulage pendant le moulage par injection est plus facilement éjectée du tiroir.
- La deuxième partie de l'organe d'éjection est montée coulissante dans une chambre ménagée dans le tiroir, la deuxième partie de l'organe d'éjection étant déplaçable entre une position de repos, vers laquelle elle est rappelée élastiquement, et une position d'éjection de la carotte. Ainsi, le volume du canal froid, et plus particulièrement du prolongement, est réduit. La quantité de matière de la carotte qui s'y forme pendant le moulage est donc également réduit, la carotte étant destinée à être séparée de l'organe à mouler.
- La chambre débouche à une extrémité dans le prolongement du canal froid et à l'autre extrémité dans une bague annulaire rapportée sur le tiroir.
- La deuxième partie de l'organe d'éjection est de forme générale de révolution et comporte un collet destiné à coopérer avec la bague annulaire formant butée, une première extrémité de contact avec la carotte et une deuxième extrémité destinée à coulisser dans un orifice central de la bague annulaire.
- La chambre comprend un dégagement et un ressort de compression, formant moyens de rappel élastique, logé dans le dégagement et agencé entre deux sièges d'appui formés par le collet et une extrémité du dégagement. Grâce au ressort de compression, la deuxième partie de l'organe d'éjection est rappelée en position de repos. On comprend en outre que le montage de la deuxième partie de l'organe d'éjection et du ressort dans le tiroir est simple à réaliser.

L'invention a également pour objet un procédé de moulage d'un organe en plastique, **caractérisé en ce que** l'on moule l'organe en plastique dans un dispositif de moulage tel que défini précédemment et en ce qu'on démoule l'organe en plastique, après moulage, en réalisant les étapes suivantes :
- on déplace la partie mobile par rapport à la partie fixe entre la position fermée et la position ouverte du dispositif de moulage, le tiroir restant solidaire de la partie mobile,
- on déplace le tiroir en translation entre la position fermée et la position ouverte du tiroir de sorte que l'organe en plastique est séparé de la carotte par rupture de matière et les deux parties de l'organe d'éjection sont sensiblement alignées, et
- on déplace la première partie de l'organe d'éjection qui coopère avec la deuxième partie de l'organe d'éjection entre la position de repos et la position d'éjection de la carotte pour éjecter la carotte du tiroir.

L'invention au aussi pour objet un masque pour projecteur de véhicule automobile, **caractérisé en ce qu'il** est obtenu par un procédé tel que défini précédemment et en ce qu'il comprend une marque de rupture de matière plastique localisée sur une contre-dépouille du masque.

L'invention sera mieux comprise à la lecture de la description qui va suivre, donnée uniquement à titre d'exemple et faite en se référant aux dessins annexés dans lesquels :
- la figure 1 est une vue en coupe d'un dispositif de moulage selon l'invention en position fermée ;
- la figure 2 est une vue en coupe de la partie mobile du dispositif de moulage de la figure 1, en position ouverte.

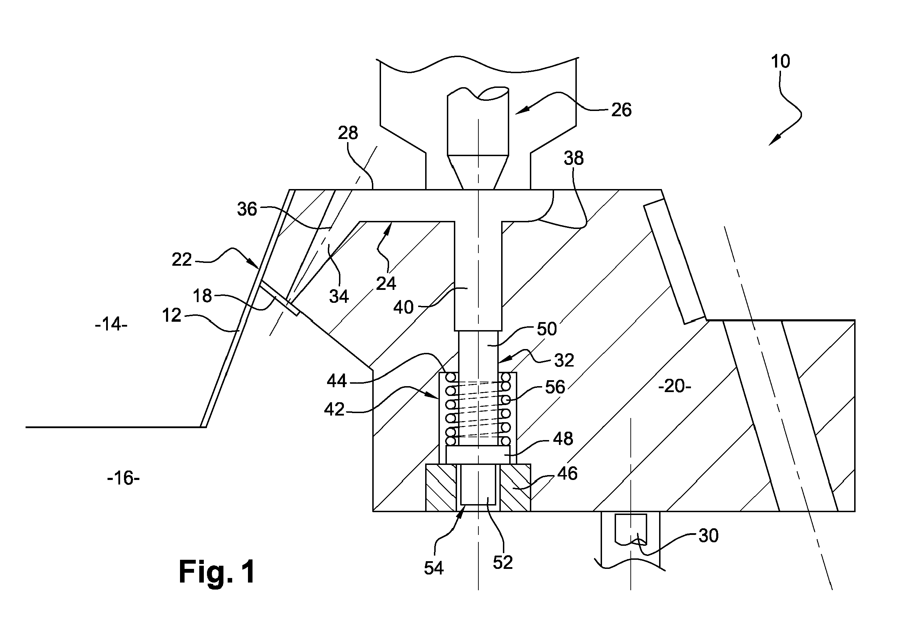

On a représenté sur la figure 1 un dispositif 10 de moulage par injection d'un organe en plastique 12, tel qu'un masque pour projecteur de véhicule automobile.

Le dispositif de moulage 10 comprend respectivement une partie fixe 14 et une partie mobile 16 déplaçables l'une par rapport à l'autre entre une position ouverte et une position fermée du dispositif de moulage 10.

On peut voir sur la figure 1 que l'organe en plastique 12 comprend une nervure 18 munie d'une surface en contre-dépouille. Afin de pouvoir démouler l'organe en plastique 12 après injection, le dispositif de moulage 10 comprend également un tiroir 20 déplaçable en translation entre une position ouverte et une position fermée du tiroir.

Sur la figure 1, le tiroir 20 et les parties fixe 14 et mobile 16 sont en position fermée et forment la cavité 22 de moulage de l'organe en plastique 12.

Le tiroir 20 comprend un canal froid 24 qui débouche dans la zone de la cavité de moulage 22 destinée à former la nervure 18 de l'organe et qui permet d'injecter la matière plastique dans la cavité de moulage 22 sans laisser de traces d'injection dans une partie de l'organe en plastique 12 ayant une fonction optique ou esthétique.

Au cours de l'injection de la matière plastique dans la cavité de moulage 22 au moyen d'une busette d'injection 26, le canal froid 24 est rempli de matière plastique qui lors du refroidissement, se solidifie sous forme d'une carotte 28 qui est ensuite détachée de l'organe en plastique 12 et éjectée du canal froid 24 afin de pouvoir mouler un autre organe en plastique 12.

La carotte 28 est éjectée hors du canal froid 24 à l'aide d'un organe d'éjection comportant au moins deux parties, la première partie 30 qui est portée par la partie mobile 16 et la deuxième partie 32 qui est portée par le tiroir 20.

Sur la figure 1, le tiroir 20 est en position fermée du tiroir qui correspond à la position de repos de la première partie 30 et de la deuxième partie 32 de l'organe déjection.

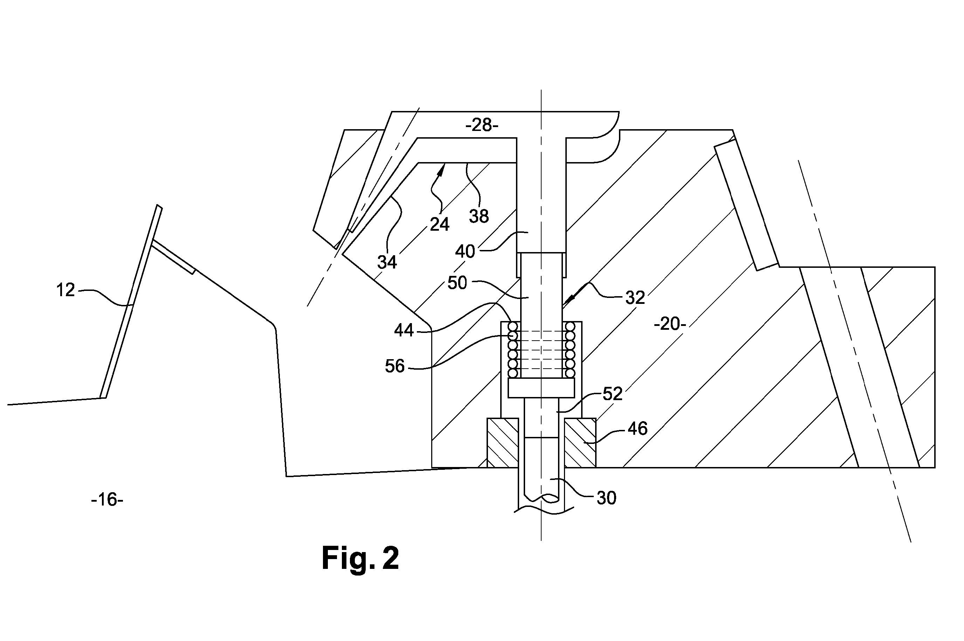

Sur la figure 2, on a représenté les parties fixe 14 et mobile 16 du dispositif 10 en position ouverte, c'est-à-dire que la partie fixe 14 et la partie mobile 16 du dispositif 10 sont éloignées l'une de l'autre de sorte qu'il est possible de démouler l'organe en plastique 12 du dispositif 10.

Sur la figure 2, le tiroir 20 est également représenté en position ouverte, c'est-à-dire que les deux parties 30, 32 de l'organe d'éjection sont sensiblement alignées et peuvent coopérer ensemble.

L'organe d'éjection 30, 32 se déplace donc entre une position de repos, représentée sur la figure 1, et une position d'éjection de la carotte 28, représentée sur la figure 2.

Comme cela peut se voir sur les figures, le tiroir 20 se déplace selon une direction sensiblement perpendiculaire à la direction de déplacement de l'organe d'éjection 30, 32.

En se référant à la figure 1, on a représenté le canal froid 24 qui comprend une partie d'injection 34 de matière plastique de forme sensiblement conique qui débouche dans la cavité de moulage 22. Cette forme conique converge vers la cavité de moulage 22 et est sensiblement de révolution autour d'un axe 36 formant un angle inférieur à 45° avec la direction d'ouverture du dispositif 10. De préférence cet angle est inférieur ou égal à 30°.

Le canal froid 24 comprend également une cavité d'homogénéisation 38 reliée d'une part à un orifice d'injection de matière plastique de la busette d'injection 26 et d'autre part à la partie d'injection 34 de forme sensiblement conique.

Le canal froid 24 comprend en outre, un prolongement 40, de forme sensiblement cylindrique ou légèrement conique dans cet exemple, qui s'étend entre la cavité d'homogénéisation 38 et une extrémité de la deuxième partie 32 de l'organe d'éjection.

La première partie 30 de l'organe d'éjection, de forme sensiblement de révolution est montée coulissante dans la partie mobile 16 du dispositif 10. Son déplacement entre la position de repos et la position d'éjection de la carotte 28 est réalisé par des moyens connus.

La deuxième partie 32 de l'organe d'éjection est montée coulissante dans une chambre 42 ménagée dans le tiroir 20. La chambre 42 débouche à une extrémité dans le canal froid 24 et à l'autre extrémité dans une bague annulaire 46 rapportée sur le tiroir 20 par des moyens connus.

La deuxième partie 32 de l'organe d'éjection a une forme générale de révolution et comporte un collet 48 qui sépare, dans cette deuxième partie 32 de l'organe d'éjection, une première extrémité 50 de contact avec la carotte 28 et une deuxième extrémité 52 destinée à coulisser dans un orifice central 54 de la bague annulaire 46.

Cette deuxième partie 32 est déplaçable entre la position de repos, vers laquelle elle est rappelée élastiquement par un ressort de compression 56, et la position d'éjection de la carotte 28.

Dans cet exemple, la chambre 42 comprend un dégagement délimité par un épaulement 44 de la chambre 42. La chambre 42 est de forme sensiblement de révolution et comporte deux parties coaxiales de sections différentes.

La première extrémité 50 coulisse dans la partie de la chambre 42 dont la section est plus petite. On comprend qu'en position de repos, la première extrémité 50 de la deuxième partie 32 de l'organe d'éjection délimite une partie du canal froid 24. Lors de l'injection de matière plastique dans le dispositif 10, la première extrémité 50 ferme le prolongement 40 du canal froid 24 dans sa partie inférieure.

Le ressort de compression 56 est logé dans le dégagement de la chambre 42. Il est agencé entre deux sièges d'appui formés par le collet 48 et l'épaulement 44 formant une extrémité du dégagement.

La bague annulaire 46 forme une butée en position de repos de la deuxième partie 32 de l'organe d'éjection.

On décrira ci-dessous les principales étapes d'un procédé selon l'invention pour le moulage de l'organe en plastique 12 au moyen du dispositif de moulage 10.

Tout d'abord, le dispositif de moulage 10 étant en position fermée, on moule l'organe en plastique 12 dans la cavité de moulage 22 du dispositif de moulage 10. Dans cette position, les deux parties 30, 32 de l'organe d'éjection sont décalées

La matière plastique est injectée dans la cavité de moulage 22 à partir de la busette 26 et par l'intermédiaire du canal froid 24 débouchant dans la zone de la cavité de moulage 22 destinée à former la nervure 18 de l'organe en plastique 12.

Après moulage, on démoule l'organe en plastique 10 en réalisant les étapes suivantes :
- tout d'abord, on déplace la partie mobile 16 par rapport à la partie fixe 14 du dispositif de moulage 10 entre la positon fermée et la position ouverte. Pendant cette étape d'ouverture du dispositif de moulage 10, l'organe moulé 12 et le tiroir 20 restent solidaires de la partie mobile 16 ;
- puis, on déplace le tiroir 20 en translation entre sa position fermée et sa position ouverte de sorte que l'organe en plastique 12 est séparé de la carotte 28 par rupture de matière et les deux parties de l'organe d'éjection 30, 32 sont sensiblement alignées ;
- ensuite, on déplace la première partie 30 de l'organe d'éjection qui coopère avec la deuxième partie 32 de l'organe d'éjection entre la position de repos et la position d'éjection de la carotte et on éjecte la carotte hors du tiroir.

Dès que le tiroir 20 est en position ouverte, l'organe en plastique 12 peut être démoulé du dispositif 10.

Une fois la carotte 28 éjectée hors du tiroir 20 et l'organe en plastique 12 démoulé, la première partie 30 de l'organe d'éjection est ramenée en position de repos. Sous l'effet du ressort de compression 56, la deuxième partie 32 de l'organe d'éjection est rappelée en position de repos, le collet 48 venant en butée contre la bague annulaire 46.

Le tiroir 20 est déplacé en position fermée, dans laquelle les deux parties 30, 32 de l'organe d'éjection sont décalées et les parties fixe 14 et mobile 16 sont déplacées l'une par rapport à l'autre de la position ouverte à la position fermée du dispositif.

Le dispositif 10 est prêt à être utilisé.

On notera qu'il reste sur l'organe en plastique 12 une marque de rupture due à la rupture de matière plastique qui a lieu lorsque la carotte 28 est séparée de l'organe en plastique 12. Cette marque est localisée sur une surface contre-dépouille de l'organe en plastique 12 qui n'a pas de fonction esthétique.

Le dispositif 10 peut bien entendu comprendre plusieurs canaux froid 24 compris dans un ou plusieurs tiroirs 20.

Par exemple, on peut envisager de mouler un masque pour projecteur de véhicule automobile comportant plusieurs pattes ou nervures 18 en contre-dépouille en injectant la matière plastique dans plusieurs zones de la cavité de moulage 22 par des canaux froids 24 compris dans des tiroirs 20.

## Revendications

1. Dispositif de moulage (10) d'un organe en plastique (12), ce dispositif comportant deux parties, respectivement fixe (14) et mobile (16), déplaçables l'une par rapport à l'autre entre une position ouverte et une position fermée du dispositif de moulage (10), un tiroir (20) déplaçable en translation entre une position ouverte et une position fermée du tiroir, les deux parties (14, 16) du dispositif et le tiroir (20) formant une cavité (22) de moulage de l'organe en plastique (12), **caractérisé en ce que** le tiroir (20) comprend un canal froid (24) débouchant dans la cavité de moulage (22), **en ce que** le dispositif (10) comprend un organe d'éjection (30, 32) d'une carotte (28) de matière plastique formée dans le canal froid (24), cet organe d'éjection (30, 32) étant déplaçable selon une direction d'éjection et comportant au moins des première (30) et deuxième (32) parties, la première partie (30) de l'organe d'éjection étant portée par la partie mobile (16) du dispositif et la deuxième partie (32) de l'organe d'éjection étant portée par le tiroir (20), le tiroir (20) étant déplaçable, sensiblement perpendiculairement à la direction de déplacement de l'organe d'éjection (30, 32), entre une position dans laquelle les deux parties de l'organe d'éjection (30, 32) sont décalées entre elles, correspondant à la position fermée du tiroir (20), et une position dans laquelle les deux parties de l'organe d'éjection (30, 32) sont sensiblement alignées entre elles de manière à pouvoir coopérer ensemble, correspondant à la position ouverte du tiroir (20), **et en ce que** la cavité de moulage (22) comporte une zone destinée à former une nervure (18) ou une patte de l'organe en plastique (12), le canal froid (24) débouchant dans cette zone.

2. Dispositif (10) selon la revendication précédente, dans lequel le canal froid (24) comprend une partie d'injection (34) de matière plastique de forme sensiblement conique débouchant dans la cavité de moulage (22) et sensiblement convergente vers cette cavité de moulage (22).

3. Dispositif (10) selon la revendication précédente, dans lequel le canal froid (24) comprend une cavité d'homogénéisation (38) reliée d'une part à un orifice d'injection de matière plastique d'une busette d'injection (26) et d'autre part à la partie d'injection (34) de forme sensiblement conique.

4. Dispositif (10) selon la revendication précédente, dans lequel le canal froid (24) comprend un prolongement (40) s'étendant entre la cavité d'homogénéisation (38) et une extrémité de la deuxième partie (32) de l'organe d'éjection.

5. Dispositif (10) selon l'une quelconque des revendications précédentes, dans lequel la deuxième partie (32) de l'organe d'éjection est montée coulissante dans une chambre (42) ménagée dans le tiroir (20), la deuxième partie (32) de l'organe d'éjection étant déplaçable entre une position de repos, vers laquelle elle est rappelée élastiquement, et une position d'éjection de la carotte.

6. Dispositif (10) selon la revendication précédente, dans lequel la chambre (42) débouche à une extrémité dans le prolongement (40) du canal froid (24) et à l'autre extrémité dans une bague annulaire (46) rapportée sur le tiroir (20).

7. Dispositif (10) selon la revendication précédente, dans lequel la deuxième partie (32) de l'organe d'éjection est de forme générale de révolution et comporte un collet (48) destiné à coopérer avec la bague annulaire (46) formant butée, une première extrémité (50) de contact avec la carotte (28) et une deuxième extrémité destinée (52) à coulisser dans un orifice central (54) de la bague annulaire (46).

8. Dispositif (10) selon la revendication précédente, dans lequel la chambre (42) comprend un dégagement et un ressort de compression (56), formant moyens de rappel élastique, logé dans le dégagement et agencé entre deux sièges d'appui formés par le collet (48) et une extrémité du dégagement (44).

9. Procédé de moulage d'un organe en plastique, **caractérisé en ce que** l'on moule un organe en plastique (12) dans un dispositif de moulage (10) selon l'une quelconque des revendications 1 à 8, **et en ce qu'**on démoule l'organe en plastique (12), après moulage, en réalisant les étapes suivantes :
- on déplace la partie mobile (16) par rapport à la partie fixe (14) entre la position fermée et la position ouverte du dispositif de moulage (10), le tiroir (20) restant solidaire de la partie mobile,
- on déplace le tiroir (20) en translation entre la position fermée et la position ouverte du tiroir de sorte que l'organe en plastique (12) est séparé de la carotte (28) par rupture de matière et les deux parties de l'organe d'éjection (30, 32) sont sensiblement alignées, et
- on déplace la première partie (30) de l'organe d'éjection qui coopère avec la deuxième partie (32) de l'organe d'éjection entre la position de repos et la position d'éjection de la carotte et on éjecte la carotte (28) hors du tiroir (20).

10. Masque (12) pour projecteur de véhicule automobile, **caractérisé en ce qu'il** est obtenu par un procédé selon la revendication 9 **et en ce qu'**il comprend une marque de rupture de matière plastique localisée sur une contre-dépouille du masque.
